# FASCICULE DE BREVET EUROPEEN

(11) **EP 1 027 550 B1**
(45) Date de publication et mention de la délivrance du brevet: **02.05.2002**
(21) Numéro de dépôt: 99923659.9
(22) Date de dépôt: 03.06.1999
(51) Int. Cl.: F16L 11/08

(54) **CONDUITE FLEXIBLE AMELIOREE POUR LE TRANSPORT DES FLUIDES**
BIEGSAME ROHRLEITUNG FÜR DEN TRANSPORT VON FLÜSSIGKEITEN
IMPROVED FLEXIBLE FLOWLINE FOR CONVEYING FLUIDS

(30) Priorité: 15.06.1998 FR 9807525; 09.04.1999 FR 9904446
(43) Date de publication de la demande: 16.08.2000
(73) Titulaire: COFLEXIP, 92973 Paris La Defense (FR)
(72) Inventeur: HARDY, Jean, F-76360 Barentin (FR); MORAND, Michel, Paul, F-76480 Duclair (FR)
(74) Mandataire: Levy, David
(86) Numéro de dépôt international: FR9901305
(87) Numéro de publication internationale: WO9966247

(56) Documents cités:
- FR-A- 2 732 441
- FR-A- 2 752 904
- US-A- 3 311 133
- US-A- 5 601 893

## Description

La présente invention concerne une conduite flexible susceptible d'être utilisée pour le transport de fluides tels que des hydrocarbures par exemple.

Plusieurs types de conduites flexibles sont utilisés. Certaines conduites flexibles comprennent de l'intérieur vers l'extérieur, une gaine interne d'étanchéité en matière plastique. élastomère ou autre matériau approprié relativement souple : un tube métallique flexible non étanche qui doit résister aux efforts développés par la pression du fluide circulant dans la conduite ; une ou plusieurs nappes d'armures et au moins une gaine d'étanchéité externe en matériau polymérique. Ce type de conduite flexible est souvent dénommé "smooth-bore" par les spécialistes en la matière.

D'autres conduites flexibles dénommées "rough-bore" comprennent, de l'intérieur vers l'extérieur, un tube métallique flexible non étanche, appelé carcasse, constitué par un profilé enroulé en spires agrafées les unes sur les autres, comme par exemple un feuillard agrafé ou un fil de forme agrafé tel qu'un fil en T. en U, en S ou en Z. une gaine d'étanchéité interne en matériau polymérique, une ou plusieurs nappes d'armures capables de résister aux efforts développés par la pression du fluide circulant dans la conduite et aux efforts extérieurs auxquels est soumise la conduite flexible. et au moins une gaine de protection externe du type polymérique.

Dans ce dernier type de conduites flexibles, la gaine d'étanchéité interne est directement extrudée, en continu, sur ladite carcasse qui présente entre les spires enroulées des interstices ou déjoints.

Pour assurer un bon contact entre la gaine d'étanchéité interne et la carcasse métallique, il est nécessaire que le diamètre interne de la gaine d'étanchéité interne soit le plus proche possible et même égale au diamètre externe de la carcasse métallique flexible.

Lors de la fabrication d'une conduite flexible du type "rough-bore", la gaine d'étanchéité interne qui est extrudée sur la carcasse métallique, se contracte sur cette dernière au cours du refroidissement. Suivant les matériaux utilisés pour la réalisation de la gaine d'étanchéité interne, on observe, après refroidissement, des déformations appelées "retassures" qui apparaissent sur la face interne de ladite gaine d'étanchéité interne et notamment de part et d'autre des déjoints entre les spires de la carcasse métallique. De telles retassures sont dues, semble-t-il, au rétreint différentiel du matériau utilisé pour la gaine d'étanchéité interne, en raison de la variation du gradient de refroidissement dans l'épaisseur de la gaine d'étanchéité interne, cumulé à l'effet des déjoints des spires de la carcasse métallique. En effet, la gaine plastique d'étanchéité extrudée étant en contact par sa face interne sur la carcasse métallique qui est à la température ambiante, il en résulte que le refroidissement de ladite face interne est très rapide, ce qui provoque des irrégularités de surface ou retassures ; ce phénomène est amplifié au niveau des déjoints des spires de la carcasse métallique, le rétreint différentiel en ces endroits provoquant des variations d'épaisseur locales de la gaine d'étanchéité interne. Lorsque la gaine d'étanchéité est en polymère semi-cristallin, sensible à la présence de défauts de surface entraînant une déchéance de la gaine pouvant aller jusqu'à la rupture, comme par exemple le PVDF, cela entraîne très souvent, en fonctionnement, une dégradation de ladite gaine d'étanchéité (rupture) qui n'assure plus alors sa fonction d'étanchéité.

Pour remédier à un tel inconvénient et pour résoudre le problème posé par l'apparition des retassures, il fut trouvé et adopté la solution qui consiste à disposer, entre la carcasse métallique et la gaine d'étanchéité interne, une sous-couche sacrificielle de faible épaisseur, en un matériau approprié tel que du PVDF. La gaine d'étanchéité interne est extrudée alors sur ladite sous-couche sacrificielle mais en s'assurant qu'il n'y est pas de "soudure" ou liaison intime entre la gaine d'étanchéité et la sous-couche "sacrificielle", afin que les fissures qui se propagent depuis la face interne de la sous-couche vers l'extérieur soient bloquées à l'interface de la gaine d'étanchéité et de la sous-couche sacrificielle. C'est ce qui est décrit dans WO 95/2478.

L'inconvénient majeur de cette solution est le glissement susceptible de se produire entre la gaine d'étanchéité interne et la sous-couche sacrificielle au niveau des extrémités de la conduite flexible, ainsi que les surcoûts de matière première et de transformation (manufacturing) occasionnés par la présence de ladite sous-couche sacrificielle.

Il est également possible de réaliser une sous-couche sacrificielle sous la forme d'un ruban mince (2 mm d'épaisseur maximum) obtenu à partir d'un homopolymère ou d'un copolymère. De façon naturelle, la gaine extrudée, appelée également gaine de pression, et la sous-couche sacrificielle, sous forme d'un film ou de ruban, présentent, au niveau des déjoints, une déformation qui permet l'accrochage de l'ensemble, constitué par la gaine et la sous-couche sacrificielle, avec le feuillard agrafé de la carcasse interne, la déformation n'étant pas suffisante pour créer des retassures de chaque côté de chaque déjoint, en raison des conditions thermiques engendrées dans le volume ainsi créé.

D'autres solutions ont été recherchées pour éliminer l'apparition des retassures ou atténuer leurs effets.

Parmi ces dernières solutions qui ont pour objet la mise en place d'une gaine d'étanchéité interne présentant, après refroidissement, une face interne cylindrique et lisse, mettent en oeuvre une conformation qui est soit interne, avec comme inconvénient principal la création de fissures longitudinales sur la face interne de la gaine d'étanchéité et un repli de matière sur la face externe, soit externe avec comme inconvénient l'absence totale d'ancrage de la gaine d'étanchéité sur la carcasse métallique.

Dans la technique de fabrication de conduites flexibles du type "smooth-bore", qui consiste à réaliser séparément la gaine interne d'étanchéité par tout moyen approprié tel que l'extrusion, et la carcasse métallique, on a préconisé de chauffer la gaine d'étanchéité ou la carcasse métallique, une fois que les deux éléments sont assemblés afin de maintenir ou de rendre plastique la gaine d'étanchéité pour l'obliger à fluer dans les déjoints des spires de la carcasse métallique. De tels procédés de fabrication sont décrits notamment dans FR-B-74 14 398 (COFLEXIP) et l'addition n° 71 16 880 (IFP).

Mais ces procédés ont pour unique but de provoquer un fluage permanent de la gaine d'étanchéité polymérique entre les spires de la carcasse métallique, après ou en même temps que des contraintes sont développées dans la gaine d'étanchéité interne pour réaliser un contact intime, les contraintes développées étant par exemple dues à une mise en pression de ladite gaine interne d'étanchéité.

Dans un exemple de mise en oeuvre décrit dans le brevet FR-B-74 14 398 et concernant une conduite flexible comprenant une gaine périphérique extrudée sur un ensemble comprenant de l'intérieur vers l'extérieur, une gaine interne d'étanchéité, une voûte de pression, deux nappes d'armures et un treillis métallique, il est préconisé de chauffer l'ensemble avant l'extrusion de la gaine périphérique de façon à maintenir au moins la face interne de ladite gaine périphérique à l'état plastique ou plus exactement à l'état thermoplastique afin, et c'est le but recherché, de faire fluer la face interne dans les mailles du treillis métallique, pour les remplir totalement et ainsi réaliser l'accrochage total de la gaine périphérique sur le treillis métallique. Dans ces conditions, il est impératif de chauffer fortement l'ensemble. à des températures qui sont de l'ordre de plusieurs centaines de degrés Celsius. De telles techniques ont donné de si mauvais résultats qu'elles ont été abandonnées très rapidement, car le remplissage aussi bien des interstices de la voûte de pression que des mailles du treillis métallique rigidifiait la conduite et diminuait en conséquence la propriété essentielle de flexibilité qu'elle doit présenter impérativement.

Dans le brevet US 3 311 133, il est décrit une conduite comprenant une carcasse métallique interne constituée par un feuillard agrafé en forme de S et dans les déjoints duquel est interposé un jonc compressible. Le but poursuivi est de contrôler le jeu entre les spires du feuillard tout en assurant une certaine flexibilité à ladite carcasse. Le jonc préconisé dans ce brevet est réalisé dans un matériau dense même s'il est compressible et qui présente des propriétés mécaniques et plastiques telles qu'il n'est pas utilisable dans l'application spécifique de la présente invention et qui sera décrite ultérieurement. Un inconvénient du jonc compressible de l'art antérieur est qu'il ne permet pas une reprise de l'effort de traction lors de sa pose entre les spires de la carcasse métallique interne.

Dans la demande 96 10 490 déposée par la demanderesse, il est préconisé de chauffer la carcasse métallique à une température inférieure à 100°C, en amont des moyens d'extrusion, de manière à éviter un refroidissement brutal de la face interne de la gaine d'étanchéité lors de son extrusion sur la carcasse métallique. Les travaux effectués sur les conduites flexibles à carcasse chauffée au préalable ont montré que le thermofluage de la gaine d'étanchéité interne était augmenté et que, parfois, cela conduisait à un blocage du feuillard. Un tel blocage a pour conséquence de déplacer la fibre neutre lors de la sollicitation en flexion et de ce fait, d'augmenter la déformation sur l'extrados de la gaine d'étanchéité interne ou gaine de pression. Or, lorsque la conduite flexible complète est cintrée au MBR (Minimum Bending Radius) et si le feuillard est bloqué, il est aisé de comprendre que pour une déformation de l'ordre de 6 % sur l'extrados de la gaine de pression, il se produit pratiquement une déformation d'environ 10 à 12 % sur l'intrados, ce qui n'est pas acceptable. De plus, les thermoplastiques présentent un allongement au seuil qui diminue au fur et à mesure que la température décroît, ce qui signifie que leur capacité de déformation est également diminuée aux basses températures. Ce phénomène n'a qu'une importance relative avec des matériaux à déformation élastique importante. typiquement supérieure à 12 % à la température de sollicitation, à condition que leur capacité à se déformer se conserve dans le temps. Par contre, avec des matériaux dont la déformation élastique est limitée, typiquement inférieure à 10-12 % à la température de sollicitation. une rupture peut se produire à cause du dépassement de cette capacité de déformation.

L'utilisation de matières thermoplastiques dont la capacité de déformation est élevée (supérieure à 10 %) n'a pas donné de bons résultats car les matières thermoplastiques connues ne résistent pas aux températures supérieures à 130-150°C (homo ou copolymère de PVDF) ou présentent d'autres inconvénients comme une mauvaise résistance au fluage (PFA). C'est la raison pour laquelle, et pour une température d'effluent d'environ 130°C, il est utilisé du homopolymère de PVDF plastifié. Toutefois, le plastifiant disparaît progressivement au cours du temps, ce qui conduit à un thermoplastique non plastifié qui ne résiste pas aux sollicitations thermiques et mécaniques. La perte du plastifiant est également problématique dans la partie de la conduite qui est logée dans l'embout terminal.

De plus, la mise en oeuvre industrielle de la carcasse chauffée et de l'extrusion subséquente de la gaine d'étanchéité interne pose de réels problèmes. En effet, en fonction de la viscosité de la matière plastique utilisée pour la gaine d'étanchéité interne et la température de chauffage de la carcasse métallique, il se produit un thermofluage plus ou moins important dans les déjoints. Comme les caractéristiques physico-chimiques de ladite matière plastique peuvent varier d'un lot à un autre, il est pratiquement impossible de maîtriser le thermofluage dans les conditions normales de mise en oeuvre industrielle ; souvent, on a constaté un thermofluage total, c'est-à-dire à un remplissage complet des déjoints. Il est aisé de comprendre qu'un thermofluage total peut aboutir à un blocage de la carcasse métallique et donc à une flexibilité réduite de la conduite. Par exemple, au-dessus de 90 % de remplissage du déjoint par la gaine d'étanchéité interne, il y a un risque de blocage en certains endroits de la conduite flexible.

FR 2 732 441 et US 5 601 893 décrivent également des conduites flexibles ainsi que leur procédé d'obtention.

La présente invention a pour but de remédier aux inconvénients précités et de proposer une conduite flexible dans laquelle au moins la gaine d'étanchéité interne est réalisée avec des matières thermoplastiques présentant seules ou en combinaison un thermofluage important et un allongement visco-élastique inférieur à 10-12 % sur toute la plage des températures comprise entre les limites d'utilisation et sans formation de retassures.

Pour ce faire, on combine, d'une part, les effets du chauffage de la carcasse de manière à éviter la formation de retassure ainsi que cela est expliqué dans la demande précédemment analysée et déposée au nom de la demanderesse et, d'autre part, en limitant le thermofluage de la gaine d'étanchéité interne dans les déjoints des spires de la carcasse afin de ne pas bloquer le mouvement du feuillard constituant ladite carcasse, tout en obtenant un accrochage positif de la gaine d'étanchéité interne sur ladite carcasse, ledit accrochage résultant du thermofluage limité dans les déjoints.

Un objet de la présente invention est un procédé de fabrication d'une conduite flexible pour le transport de fluides tels que des hydrocarbures, du type comprenant, de l'intérieur vers l'extérieur, une carcasse métallique flexible à enroulement hélicoïdal de spires non jointives, un jonc compressible disposé dans le déjoint entre les spires consécutives dudit enroulement hélicoïdal, une gaine interne d'étanchéité extrudée sur ladite carcasse métallique, au moins une nappe d'armures enroulée autour de ladite gaine d'étanchéité interne et au moins une gaine d'étanchéité externe disposée autour de ladite nappe d'armures, et elle est caractérisée en ce que le jonc compressible présente une déformation volumique en compression volumique au moins égale à 50 %.

Le fait d'utiliser un jonc qui est fortement compressible, notamment sous faible charge en contrainte, permet au thermofluage de se produire lors de l'extrusion de la gaine d'étanchéité interne sur la carcasse métallique tout en limitant la pénétration à une valeur prédéterminée.

Selon une autre caractéristique, la carcasse métallique est chauffée avant l'extrusion de la gaine d'étanchéité, ce qui facilite le thermofluage tout en évitant la formation de retassures.

Selon une autre caractéristique, le jonc est réalisé dans un matériau alvéolaire comprenant entre 40 et 60 % en volume de cellules creuses et présentant un premier module d'élasticité E₁ de la partie cellulaire et un deuxième module d'élasticité E₂ de la partie dense, le rapport des deux modules E₂/E₁ étant au moins supérieur à 10.

Selon une autre caractéristique, le jonc est constitué par un tube creux qui peut être réalisé dans un matériau dense de préférence, ou alvéolaire.

D'autres avantages et caractéristiques apparaîtront plus clairement à la lecture de la description d'un mode de réalisation préféré de l'invention, ainsi que des figures annexées sur lesquelles :

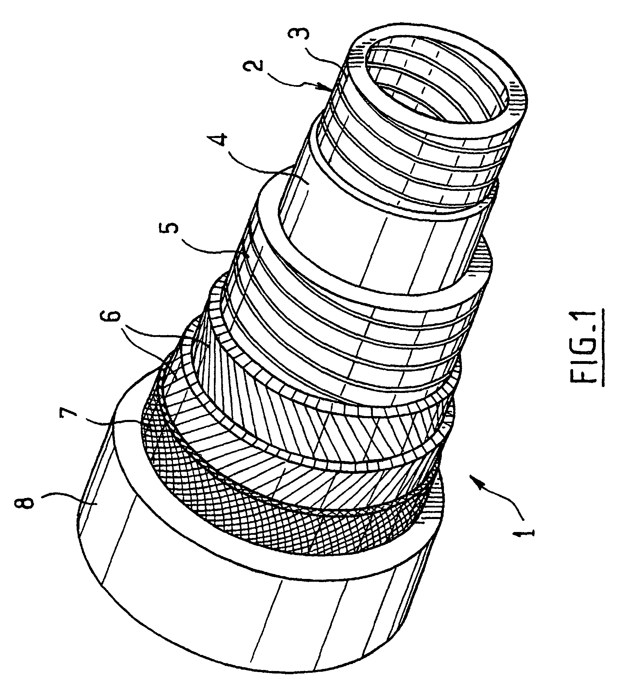

- la figure 1 est une vue en perspective partielle et arrachée d'une conduite flexible,
- la figure 2 est une vue schématique et partielle d'une partie de la carcasse métallique revêtue d'une partie d'une gaine d'étanchéité interne selon la présente invention,
- la figure 3 représente une courbe de la contrainte en N/mm linéaire en fonction du déplacement en pour-cent.

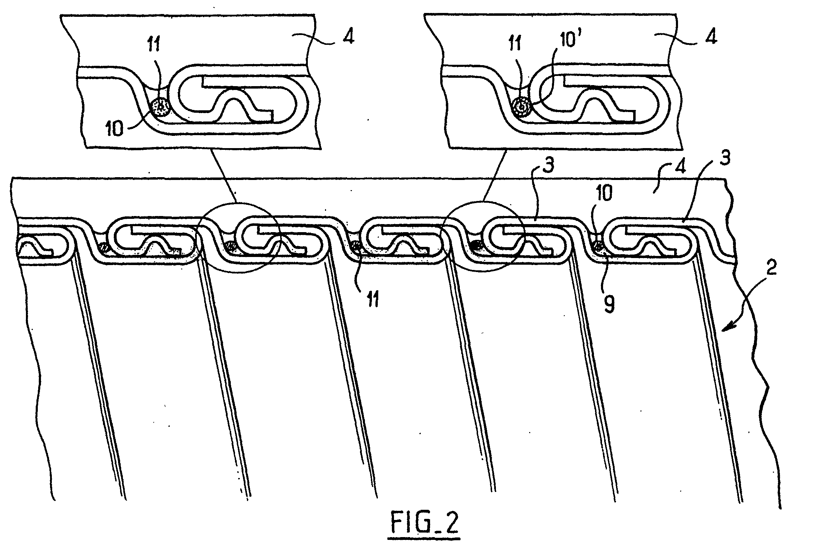

La conduite flexible 1 selon l'invention est du type comprenant de l'intérieur vers l'extérieur :
- une carcasse métallique 2 réalisée par un enroulement hélicoïdal d'un fil métallique à spires 3 non jointives et de section prédéterminée, par exemple en S comme dans l'exemple représenté sur la figure 2,
- une gaine d'étanchéité interne 4 disposée par extrusion autour de la carcasse métallique 2,
- une voûte de pression 5,
- une ou plusieurs nappes d'armure 6,
- éventuellement une bande intermédiaire 7, et
- une gaine d'étanchéité externe 8.

La gaine d'étanchéité externe 8 peut être également extrudée sur la bande intermédiaire 7 lorsqu'elle existe ou sur la nappe d'armures extérieure 6, les gaines d'étanchéité interne 4 et externe 8 étant réalisées dans une matière plastique commune ou dans des matières plastiques différentes en fonction des besoins et de la destination de la conduite flexible 1.

La carcasse métallique étant à spires 3 non jointives, un espace ou déjoint 9 est ménagé entre deux spires consécutives 3. Pendant ou après la fabrication de la carcasse métallique 2, un jonc compressible 10 est disposé dans les déjoints 9 (figure 2). Le jonc compressible 10 peut, selon l'étape de fabrication pendant laquelle il est inséré dans les déjoints, se positionner au fond de ces derniers ou à une certaine hauteur du fond desdits déjoints. Dans tous les cas, il est positionné de sorte qu'au plus 75 % du volume de chaque déjoint peut être rempli, par la matière de la gaine d'étanchéité interne 4, ladite matière venant en appui sur le jonc compressible. Bien entendu, la géométrie du jonc compressible est adaptée à la forme du déjoint ; dans une forme de réalisation préférée de l'invention. la section dudit jonc compressible présente une section au moins égale à 25 % de la section droite du déjoint au pas moyen du feuillard agrafé ayant été utilisé pour la fabrication de la carcasse métallique de manière à s'assurer, comme précisé précédemment, qu'au plus 75 % du volume soit disponible pour le thermofluage de la gaine d'étanchéité interne.

Dans un premier mode de réalisation, le jonc compressible est fabriqué dans un matériau qui doit répondre à certaines caractéristiques et notamment :
- présenter un taux de compression volumique au moins égal à 50 % et il est choisi dans la famille des élastomères hydrogénocarbonés et, de préférence, dans la famille des élastomères siliconés ou silicofluorés,
- résister au moins cinq minutes à la température à laquelle est portée la gaine d'étanchéité interne pendant son extrusion sur la carcasse métallique.

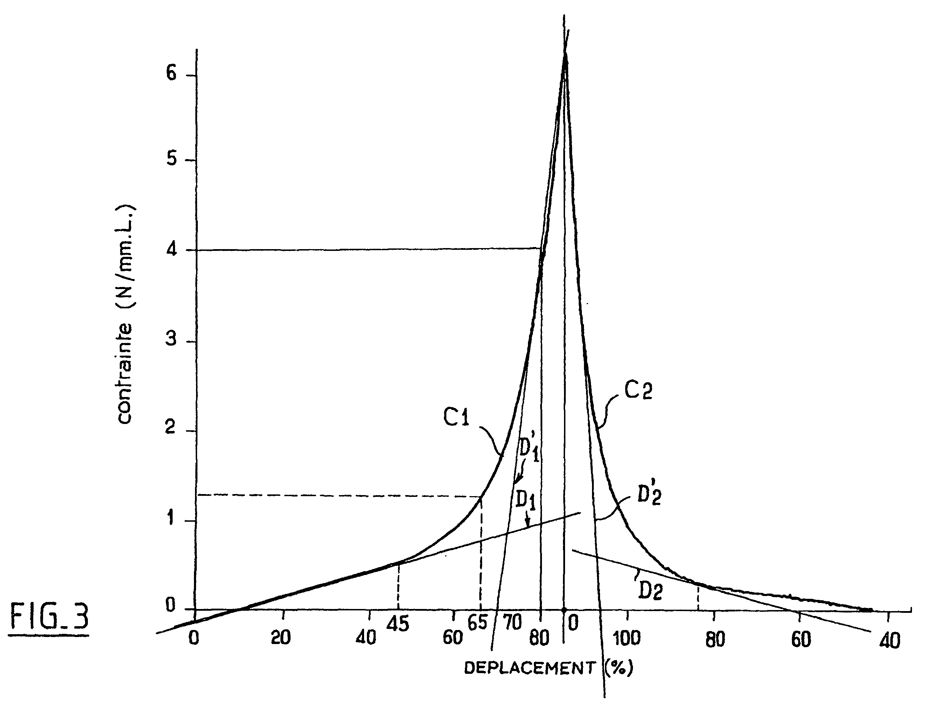

Selon un mode de réalisation préféré de l'invention, le jonc compressible est réalisé dans un matériau cellulaire qui présente une compressibilité volumique importante sous une faible charge, la matière dense dudit jonc occupant un volume compris entre 40 et 60 % du volume total dudit jonc. En se référant à la figure 3, qui représente, d'une part, une première courbe C₁ (partie gauche) représentant la contrainte en Newton par millimètre linéaire et une deuxième courbe C₂ représentant le retour élastique après compression, d'autre part, on constate que le matériau présente un premier module d'élasticité E₁ relative à la partie creuse dudit matériau et un deuxième module d'élasticité E₂ relative à la partie dense du même matériau. Le module E₁ est déterminé par la droite D₁ qui est tangente à la courbe C₁ pour le point d'abscisse de 40 % environ, alors que le module d'élasticité E₂ est déterminé par la droite D'₁ qui est tangente à la courbe C₁ pour le point d'abscisse de 75 % environ. Le rapport E₂/E₁ est dans tous les cas supérieur à 10 et de préférence supérieur à 30. Sur la courbe C₁, il est constaté que pour un déplacement en volume (ou compression) de 50 % du jonc, la contrainte qu'il faut appliquer pour obtenir un tel déplacement est de 0,4 N/mm linéaire et que pour 65 % de déplacement, la contrainte est de l'ordre de 1,3 N/mm linéaire, la compression totale de la partie alvéolaire du jonc correspondant à un déplacement de 80 % pour une contrainte de 4 N/mm linéaire. La courbe C₂ montre que le matériau testé présente un retour élastique d'au moins 60 %, c'est-à-dire que le matériau, lorsque la compression cesse, retrouve pratiquement sa forme et son volume initiaux. Dans tous les cas, la compressibilité volumique est importante sous une faible contrainte qui est inférieure à 1 Newton par millimètre linéaire pour un déplacement de 60 % de matière dudit jonc.

Dans un deuxième mode de réalisation, le jonc compressible est réalisé sous la forme d'un tube creux 10', de section circulaire de préférence. Les diamètres externe et inteme du tube creux sont choisis. en fonction de la nature du matériau utilisé pour la fabrication dudit tube creux, de telle sorte que le volume occupé par ledit jonc à l'état comprimé est au plus égal à la moitié du volume occupé par ledit jonc à l'état non comprimé. Un matériau préféré pour la fabrication du jonc est un élastomère siliconé ou hydrogénocarboné de dureté shore A comprise entre 65 et 85.

Le diamètre extérieur du tube creux est de l'ordre de 0,6 à 0,7 fois la profondeur du déjoint ou hauteur libre de la carcasse. Pour un feuillard constituant la carcasse de dimensions 48 x 1,2 mm, le diamètre sera de 0,6 x 4 x 1,2 = 2,88 mm, pour un feuillard de 40 x 0,8 mm, le diamètre est de préférence 0,7 x 4 x 0,8 = 2,24 mm.

L'épaisseur de la paroi du tube creux est de 0,1 à 0,25 et de préférence de 0,12 à 0,15 fois le diamètre dudit tube creux.

De manière à permettre la reprise de l'effort de traction nécessaire à sa pose dans les déjoints 9 de la carcasse métallique, au moins un renfort 11 est soit noyé dans la masse du jonc compressible 10 lorsque le matériau utilisé est alvéolaire, soit disposé de préférence dans la partie creuse du tube constituant le jonc. Dans les deux cas, le renfort est unidirectionnel et réalisé dans une matière minérale, organique ou végétale. Le renfort unidirectionnel confère en outre une certaine raideur longitudinale au jonc, de sorte que le rapport Δl/l soit sensiblement proche de zéro, ce qui facilite davantage sa mise en place dans les déjoints ainsi que la reprise de l'effort de traction auquel il peut être soumis lors de sa mise en place dans les déjoints du feuillard ; cela évite ainsi la variation (diminution) de section du jonc et permet de maintenir la compacité du jonc dans les déjoints telle qu'elle était initialement (40 à 60 %) avant sa mise en place. Dans le cas du tube creux, le renfort 11 est disposé de préférence, au centre dudit tube bien que le positionnement puisse être différent. De même, il est possible de loger le renfort 11 dans la matière constituant ledit tube en n'importe quel endroit.

Bien entendu, si l'effort de traction est relativement faible lors de la mise en place dans les déjoints, alors il est possible de ne pas utiliser un renfort dans le jonc.

Un procédé de fabrication de la conduite flexible décrite ci-dessus, consiste à interposer le jonc compressible lorsque la carcasse métallique 2 est sous tension axiale et avant que la gaine plastique 4 ne soit extrudée sur ladite carcasse métallique. La mise sous tension axiale de la carcasse métallique a pour conséquence de permettre au déjoint 9 d'être à leur ouverture maximum, de sorte que le jonc peut être facilement logé dans les déjoints ouverts. Lorsque la tension axiale est relâchée, les dimensions des déjoints se réduisent, ce qui permet au jonc compressible d'être maintenu dans la position appropriée pour limiter le fluage de la gaine 4 dans les déjoints.

Toutes les formes ou sections du jonc sont possibles telles que circulaire, triangulaire, rectangulaire pour autant que, dans tous les cas elles soient compatibles avec la section droite du déjoint de la carcasse dans lequel le jonc est disposé.

L'utilisation d'un jonc sous forme d'un tube creux au lieu d'un jonc plein alvéolaire permet de s'adapter davantage aux dimensions du déjoint. En effet, lorsque le déjoint est relativement important, le jonc occupe le déjoint tout en étant largement ouvert. Lorsque le déjoint présente une largeur peu importante c'est-à-dire lorsque deux spires consécutives de la carcasse sont plus rapprochées, le jonc se déforme dans le sens de la hauteur du déjoint par rapprochement des parois du jonc qui se trouve plus fermé. Pour une largeur du déjoint encore plus réduite, le jonc peut être aplati avec mise en contact des parois qui se sont comprimées par les spires de la carcasse. Ainsi quelle que soit la configuration de la carcasse, le tube creux formant le jonc peut être utilisé grâce à sa meilleure adaptation aux dimensions des déjoints.

## Revendications

1. Conduite flexible (1) pour le transport de fluides tels que des hydrocarbures, du type comprenant, de l'intérieur vers l'extérieur, une carcasse métallique (2) flexible à enroulement hélicoïdal de spires (3) non jointives, un jonc compressible (10) disposé dans le déjoint (9) entre les spires consécutives dudit enroulement hélicoïdal, une gaine interne d'étanchéité (4) extrudée sur ladite carcasse métallique, au moins une nappe d'armures (6) enroulée autour de ladite gaine d'étanchéité interne (4) et au moins une gaine d'étanchéité externe (8) disposée autour de ladite nappe d'armures, **caractérisée en ce que** le jonc compressible (10, 10') présente une déformation volumique importante en compression au moins égale à 50 %.

2. Conduite flexible (1) selon la revendication 1, **caractérisée en ce que** le jonc est réalisé dans un matériau cellulaire constitué par une partie de matière dense et par des cellules creuses, la matière dense occupant un volume compris entre 40 et 60 % du volume total dudit jonc (10), **en ce que** ledit matériau présente un premier module d'élasticité (E₁) correspondant à une compression des cellules creuses et un deuxième module d'élasticité (E₂) correspondant à une compression de ladite matière dense, le rapport E₂/E₁ étant au moins égal à 10.

3. Conduite flexible (1) selon la revendication 2, **caractérisée en ce que** le matériau cellulaire présente une contrainte faible jusqu'à 50 % de la compression, ladite contrainte étant inférieure à un Newton par millimètre linéaire dudit jonc (10).

4. Conduite flexible (1) selon la revendication 3, **caractérisée en ce que** ladite contrainte est inférieure à 0,6 N par millimètre linéaire dudit jonc.

5. Conduite flexible selon la revendication 1, **caractérisée en ce que** le matériau présente une contrainte supérieure à un Newton par millimètre linéaire du jonc à partir de 65 % de compression.

6. Conduite flexible (1) selon la revendication 1, **caractérisée en ce que** le rapport E₂/E₁ desdits modules d'élasticité est supérieur à 30.

7. Conduite flexible (1) selon la revendication 1, **caractérisée en ce que** le jonc est constitué par un tube creux (10').

8. Conduite flexible (1) selon l'une des revendications précédentes, **caractérisée en ce que** la profondeur de pénétration de la gaine d'étanchéité interne (4) dans les déjoints (9) est au plus égale à 75 % de la profondeur des déjoints.

9. Conduite flexible (1) selon la revendication 8, **caractérisée en ce que** la profondeur de pénétration est avantageusement de 50 % et de préférence de 30 %.

10. Conduite flexible selon la revendication 1 ou 7, **caractérisée en ce que** le matériau du jonc compressible est un élastomère contenant du silicium et de préférence un élastomère silicofluoré.

11. Conduite flexible selon l'une des revendications 1 à 9. **caractérisée en ce qu'**au moins un renfort unidirectionnel (11) est logé dans le jonc compressible (10, 10'), de manière à conférer à ce dernier une raideur longitudinale facilitant la mise en place dudit jonc dans les déjoints (9) de la carcasse métallique (2).

12. Conduite flexible (1) selon la revendication 10, **caractérisée en ce que** le renfort unidirectionnel (11) est en matière minérale ou organique ou végétale.

13. Conduite flexible selon les revendications 11 et 7, **caractérisée en ce que** le renfort unidirectionnel (11) est disposé sensiblement au centre du tube creux (10').

14. Procédé de fabrication de la conduite flexible selon la revendication 1, **caractérisé en ce que** le jonc compressible (10) est enroulé dans les déjoints (9) de la carcasse métallique (2) lorsque cette dernière est sous tension axiale et que les déjoints (9) sont à leur ouverture maximum.

## Claims

1. Flexible pipe (1) for transporting fluids such as hydrocarbons, of the type comprising, from the inside outwards, a flexible metal carcass (2) with a helical winding of non-contiguous turns (3), a compressible rod (10) fitted into the gap (9) between the consecutive turns of the said helical winding, an internal sealing sheath (4) extruded over the said metal carcass, at least one ply of armours (6) wound around the said internal sealing sheath (4) and at least one external sealing sheath (8) arranged around the said ply of armours, the pipe being **characterized in that** the compressible rod (10, 10') has a substantial volumetric deformation in compression of at least 50%.

2. Flexible pipe (1) according to Claim 1, **characterized in that** the rod is made of a cellular material consisting of a part made of a dense substance and of hollow cells, the dense substance occupying a volume of between 40 and 60% of the total volume of the said rod (10), **in that** the said material has a first elastic modulus (E₁) corresponding to compression of the hollow cells, and a second elastic modulus (E₂) corresponding to compression of the said dense substance, the ratio E₂/E₁ being at least equal to 10.

3. Flexible pipe (1) according to Claim 2, **characterized in that** the cellular material is lightly stressed up to the 50% compression point, the said stress being less than one Newton per linear millimetre of the said rod (10).

4. Flexible pipe (1) according to Claim 3, **characterized in that** the said stress is below 0.6 N per linear millimetre of the said rod.

5. Flexible pipe according to Claim 1, **characterized in that** the material experiences stress in excess of one Newton per linear millimetre of the rod from the 65% compression point onwards.

6. Flexible pipe (1) according to Claim 1, **characterized in that** the ratio E₂/E₁ of the said elastic moduli is higher than 30.

7. Flexible pipe (1) according to Claim 1, **characterized in that** the rod consists of a hollow tube (10').

8. Flexible pipe (1) according to one of the preceding claims, **characterized in that** the depth to which the internal sealing sheath (4) penetrates the gaps (9) is at most equal to 75% of the depth of the gaps.

9. Flexible pipe (1) according to Claim 8, **characterized in that** the depth of penetration is advantageously 50% and preferably 30%.

10. Flexible pipe according to Claim 1 or 7, **characterized in that** the material of the compressible rod is a silicon-containing elastomer and preferably a silico-fluorinated elastomer.

11. Flexible pipe according to one of Claims 1 to 9, **characterized in that** at least one unidirectional strengthener (11) is housed inside the compressible rod (10, 10') so as to give the latter a longitudinal stiffness to make the said rod easier to fit into the gaps (9) of the metal carcass (2).

12. Flexible pipe (1) according to Claim 10, **characterized in that** the unidirectional strengthener (11) is made of an inorganic, organic or vegetable substance.

13. Flexible pipe according to Claims 11 and 7, **characterized in that** the unidirectional strengthener (11) is arranged approximately at the centre of the hollow tube (10').

14. Method for manufacturing the flexible pipe according to Claim 1, **characterized in that** the compressible rod (10) is wound into the gaps (9) of the metal carcass (2) while the latter is under axial tension and the gaps (9) are at their widest.

## Patentansprüche

1. Flexible Rohrleitung (1) für den Transport von Flüssigkeiten wie Kohlenwasserstoffen, vom Typ, der innen nach außen aufweist: eine flexible Karkasse (2) aus Metall, die schraubenförmig mit sich nicht berührenden Windungen (3) gewickelt ist, eine kompressible Einlage (10) in dem Zwischenraum (9) zwischen den aufeinanderfolgenden Windungen der schraubenförmigen Wicklung, einen inneren Dichtigkeitsmantel (4), der auf die Metallkarkasse extrudiert ist, mindestens eine Bewehrungslage (6), die um den inneren Dichtigkeitsmantel (4) gewickelt ist, und mindestens einen äußeren Dichtigkeitsmantel (8), der um die Bewehrungslage herum angeordnet ist, **dadurch gekennzeichnet, daß** die kompressible Einlage (10, 10') eine beträchtliche Volumendeformation unter Druck von mindestens 50 % aufweist.

2. Flexible Rohrleitung (1) nach Anspruch 1, **dadurch gekennzeichnet, daß** die Einlage aus einem zellularen Material gefertigt ist, das aus einem Teil aus kompakten Material und aus hohlen Zellen besteht, wobei das kompakte Material ein Volumen zwischen 40 und 60 % des Gesamtvolumens der Einlage (10) einnimmt, daß das Material einen ersten Elastizitätsmodul (E₁) entsprechend einer Kompression der hohlen Zellen und einen zweiten Elastizitätsmodul (E₂) entsprechend einer Kompression des kompakten Materials aufweist, wobei das Verhältnis E₂/E₁ mindestens 10 beträgt.

3. Flexible Rohrleitung (1) nach Anspruch 2, **dadurch gekennzeichnet, daß** das zellulare Material bis zu 50 % seiner Kompression eine geringe Spannung aufweist, wobei diese Spannung kleiner als ein Newton pro Millimeter Länge der Einlage (10) ist.

4. Flexible Rohrleitung (1) nach Anspruch 3, **dadurch gekennzeichnet, daß** die Spannung kleiner als 0,6 N pro Milimeter Länge der Einlage ist.

5. Flexible Rohrleitung nach Anspruch 1, **dadurch gekennzeichnet, daß** das Material ab 65 % der Kompression eine Spannung von mehr als einem Newton pro Millimeter Länge der Einlage aufweist.

6. Flexible Rohrleitung (1) nach Anspruch 1, **dadurch gekennzeichnet, daß** das Verhältnis E_{**2**}/E_{**1**} der Elastizitätsmodule größer als 30 ist.

7. Flexible Rohrleitung (1) nach Anspruch 1, **dadurch gekennzeichnet, daß** die Einlage aus einem hohlen Schlauch (10') besteht.

8. Flexible Rohrleitung (1) nach einem der vorangehenden Ansprüche, **dadurch gekennzeichnet, daß** die Eindringtiefe des inneren Dichtigkeitsmantels (4) in die Zwischenräume (9) höchstens 75 % der Tiefe der Zwischenräume beträgt.

9. Flexible Rohrleitung (1) nach Anspruch 8, **dadurch gekennzeichnet, daß** die Eindringtiefe vorteilhafterweise 50 % und vorzugsweise 30 % beträgt.

10. Flexible Rohrleitung nach Anspruch 1 oder 7, **dadurch gekennzeichnet, daß** das Material der kompressiblen Einlage ein siliziumhaltiges Elastomer und vorzugsweise ein Elastomer auf Fluorsiliconbasis ist.

11. Flexible Rohrleitung nach einem der Ansprüche 1 bis 9, **dadurch gekennzeichnet, daß** in der kompressiblen Einlage (10, 10') mindestens eine in einer Richtung verlaufende Verstärkung (11) angeordnet ist, um die Einlage in Längsrichtung zu versteifen, um das Einbringen der Einlage in die Zwischenräume (9) der Metallkarkasse (2) zu erleichtern.

12. Flexible Rohrleitung (1) nach Anspruch 10, **dadurch gekennzeichnet, daß** die in einer Richtung verlaufende Verstärkung (11) aus einem mineralischen oder organischen oder pflanzlichen Material besteht.

13. Flexible Rohrleitung nach den Ansprüchen 11 und 7, **dadurch gekennzeichnet, daß** die in einer Richtung verlaufende Verstärkung (11) im wesentlichen in der Mitte des hohlen Schlauches (10') angeordnet ist.

14. Verfahren zur Herstellung der flexiblen Rohrleitung nach Anspruch 1, **dadurch gekennzeichnet, daß** die kompressible Einlage (10) in die Zwischenräume (9) der Metallkarkasse (2) gewickelt wird, während diese unter axialer Spannung steht und die Zwischenräume (9) maximal geöffnet sind.
